# EUROPEAN PATENT APPLICATION

(11) **EP 4 726 445 A1**
(43) Date of publication of application: **15.04.2026**
(21) Application number: 24823109.4
(22) Date of filing: 22.04.2024
(51) Int. Cl.: G02B 6/36, B08B 1/32

(54) **OPTICAL CONNECTOR CLEANING TOOL**

(30) Priority: 12.06.2023 JP 2023096163
(71) Applicant: Fujikura Ltd., Tokyo 135-8512 (JP)
(72) Inventor: WATANABE, Junya, Sakura-shi, Chiba 285-8550 (JP)
(74) Representative: Ter Meer Steinmeister & Partner
(86) International application number: PCT/JP2024/015787
(87) International publication number: WO 2024/257487

(57) **Abstract**

An optical connector cleaning tool 1 includes a cleaning shaft 20, a feeding bobbin 33, a winding bobbin 31, a support body 40, a case 60, the rotation mechanism 91 that rotates the cleaning shaft 20 around a rotation axis RA in accordance with a relative movement of the support body 40 with respect to the case 60, and a gear 32 attached to the winding bobbin 31, the cleaning shaft 20 includes a supply port 252 and a collection port 253, and the rotation mechanism 91 rotates the cleaning shaft 20 around the rotation axis RA so that the collection port 253 moves away from the gear 32 when the relative movement of the support body 40 with respect to the case 60 starts.

## Description

### [TECHNICAL FIELD]

The present invention relates to an optical connector cleaning tool that cleans a connection end surface of an optical connector.

For designated countries that are permitted to be incorporated by reference in the literature, the contents of Japanese Patent Application No. 2023-096163 filed with Japan Patent Office on June 12, 2023 is incorporated herein by reference and is regarded as a part of the description of this specification.

### [BACKGROUND ART]

An optical connector cleaning tool is known that includes a head member including a pressing surface pressing a cleaning element against a connection end surface of an optical connector, a feeding reel that supplies the cleaning element to the head member, a winding reel that wind up the cleaning element from the head member, and a gear attached to the winding reel (refer to, for example, Patent Document 1).

### [CITATION LIST]

### [PATENT DOCUMENT]

PATENT DOCUMENT 1: JP 2010-191465 A

### [SUMMARY OF THE INVENTION]

### [PROBLEMS TO SOLVED BY INVENTION]

In the optical connector cleaning tool described above, since the position of winding the cleaning element in the axial direction of the winding reel is not controlled when the cleaning element is wound around the winding reel, there is a possibility that the cleaning element is unevenly wound in the axial direction of the winding reel. Therefore, in the optical connector cleaning tool described above, the number of times in which the optical connector can be cleaned is limited in order to prevent the cleaning element from overflowing from the winding reel and being entangled with the gear.

An object of the present invention is to provide an optical connector cleaning tool capable of increasing the number of cleanable times.

### [MEANS FOR SOLVING PROBLEM]

[1] An aspect 1 of the present invention is an optical connector cleaning tool that cleans a connection end surface of an optical connector, the optical connector cleaning tool comprising: a cleaning shaft that comprises a pressing surface pressing a cleaning element against the connection end surface and in which the cleaning element is wound on the pressing surface; a feeding bobbin that supplies the cleaning element to the pressing surface, a winding bobbin that collects the cleaning element from the pressing surface, a support body that supports the cleaning shaft, the feeding bobbin, and the winding bobbin, a housing that accommodates the support body so that the support body is relatively movable with respect to the housing; the rotation mechanism that rotates the cleaning shaft around a rotation axis parallel to a longitudinal direction of the cleaning shaft in accordance with a relative movement of the support body with respect to the housing; and a gear attached to the winding bobbin, wherein the cleaning shaft comprises: a supply port through which the cleaning element supplied to the pressing surface passes; and a collection port through which the cleaning element collected from the pressing surface passes, and the rotation mechanism rotates the cleaning shaft around the rotation axis so that the collection port moves away from the gear when the relative movement of the support body with respect to the housing starts.
[2] An aspect 2 of the present invention may be the optical connector cleaning tool of the aspect 1, wherein the rotation mechanism may comprise: a cam groove included in the cleaning shaft; and a cam pin included in the housing and inserted into the cam groove, the collection port may be disposed on one side with respect to the rotation axis, and the cam groove may have a spiral shape that rotates in an other side around the rotation axis.
[3] An aspect 3 of the present invention may be the optical connector cleaning tool of the aspect 1or 2, wherein the support body may comprise: a first shaft part that rotatably supports the feeding bobbin; a second shaft part that rotatably supports the winding bobbin; and a base part that supports the first and second shaft parts, and the rotation mechanism may rotate the cleaning shaft around the rotation axis so that the collection port approaches the base part when the relative movement of the support body with respect to the housing starts.
[4] An aspect 4 of the present invention may be the optical connector cleaning tool of the aspect 3, wherein the rotation mechanism may comprise: a cam groove included in the cleaning shaft; and a cam pin included in the housing and inserted into the cam groove, the collection port may be disposed on a right side with respect to the rotation axis, the base part may be disposed below the first and second shaft parts with respect to the rotation axis as a center, and the cam groove may have a left-handed spiral shape around the rotation axis.
[5] An aspect 5 of the present invention may be the optical connector cleaning tool of any one of the aspects 1 to 4, wherein the optical connector cleaning tool may comprises a drive mechanism that rotates the winding bobbin to wind the cleaning element around the winding bobbin in accordance with the relative movement of the support body with respect to the housing, and the drive mechanism may comprise: a pinion gear part included in the gear; and a rack gear part included in the housing and that is engaged with the pinion gear part.
[6] An aspect 6 of the present invention may be the optical connector cleaning tool of any one of the aspects 1 to 5, wherein the optical connector cleaning tool may comprise a transmission mechanism that transmits rotation in only one direction from the gear to the winding bobbin, and the transmission mechanism may comprise: a first engagement part included in the gear; and a second engagement part included in the winding bobbin and that is engaged with the first engagement part when the gear rotates in the one direction.

### [EFFECT OF THE INVENTION]

In the present invention, since the rotation mechanism rotates the cleaning shaft so that the collection port moves away from the gear when the relative movement of the support body starts, it is possible to prevent the cleaning element from being entangled with the gear, and it is possible to increase the number of cleanable times.

### [BRIEF DESCRIPTION OF DRAWING(S)]

FIG. 1 is a front view showing the optical connector as a cleaning object of the optical connector cleaning tool in the embodiment of the present invention;
FIG. 2 is a perspective view showing the optical connector cleaning tool in the embodiment of the present invention;
FIG. 3 is an exploded perspective view of the optical connector cleaning tool in the embodiment of the present invention;
FIG. 4 is a perspective view showing the cleaning unit in the embodiment of the present invention;
FIG. 5(a) is a front view showing the front end portion of the cleaning head in the embodiment of the present invention, and FIG. 5(b) is a cross-sectional view taken along line VB-VB in FIG. 5(a);
FIG. 6(a) is a plan view of the inside of the support body seen along the arrow VIA in FIG. 3, and FIG. 6(b) is a cross-sectional view taken along line VIB-VIB in FIG. 6(a);
FIG. 7 is a perspective view showing the rotation mechanism in the embodiment of the present invention;
FIG. 8 is a perspective view showing the transmission mechanism in the embodiment of the present invention; and
FIG. 9 is a perspective view showing the drive mechanism in the embodiment of the present invention.

### [MODE(S) FOR CARRYING OUT THE INVENTION]

Hereinafter, embodiments of the invention will be described with reference to the drawings.

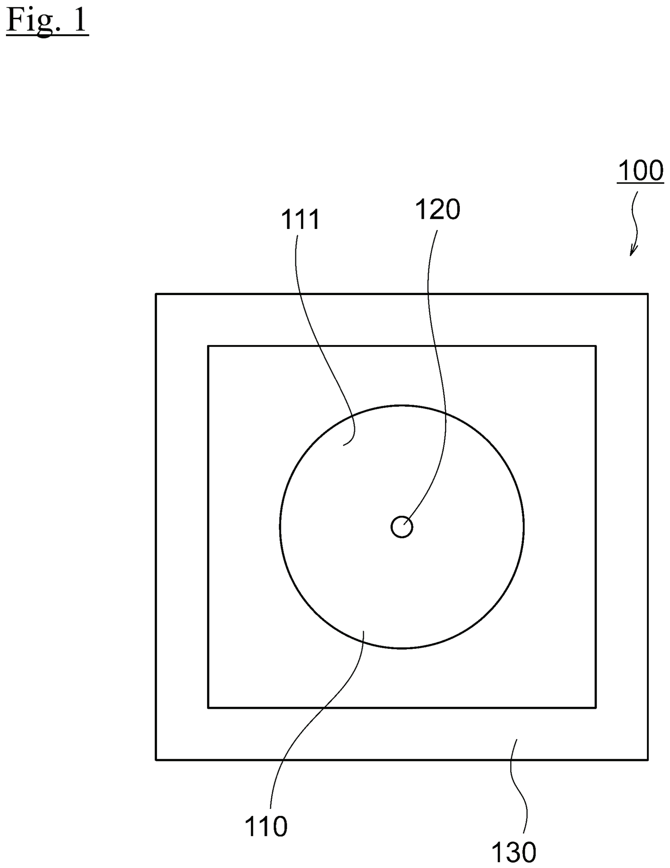

The optical connector cleaning tool 1 in the embodiment of the present invention is a cleaner that cleans a connection end surface of an optical connector that connects optical fibers. FIG. 1 is a front view showing the optical connector 100 as a cleaning object of the optical connector cleaning tool 1 in the embodiment of the present invention.

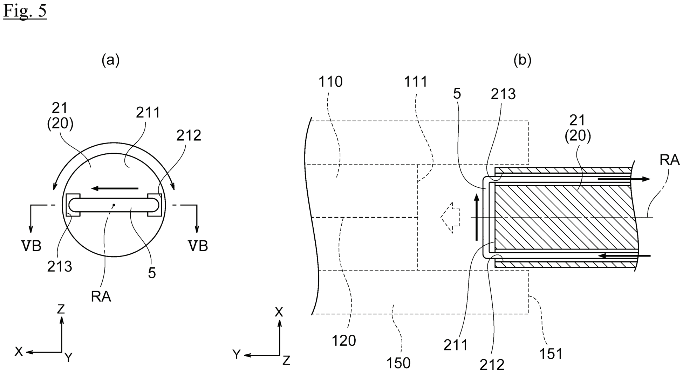

Although not particularly limited, the optical connector 100 that is a cleaning object of the optical connector cleaning tool 1 is a single-fiber connection type optical connector plug. As shown in FIG. 1, the optical connector 100 includes a ferrule 110 having a cylindrical shape and a housing 130 that accommodates the ferrule 110 therein. The ferrule 110 has a fiber holding hole penetrating the ferrule 110 in the longitudinal direction thereof (refer to FIG. 5(b)). An optical fiber 120 is inserted into the fiber holding hole, and the optical fiber 120 is fixed to the ferrule 110 with an adhesive or the like. The optical fiber 120 is exposed from the circular connection end surface 111 of the ferrule 110.

Although not particularly limited, as a specific example of the optical connector 100, the single core optical connector such as SC (Single-fiber Coupling) type optical connector specified in JIS C5973, FC (Fiber Connector) type optical connector specified in JIS C5970, MU (Miniature Universal) type optical connector specified in JIS C5983, LC (Lucent Connector) type optical connector, and the like can be exemplified.

A pair of optical connectors 100 each including the ferrule 110 are connected to each other using an adapter. Specifically, the pair of optical connectors 100 are inserted into the openings on both sides of the adapter, and the ferrules 110 are respectively inserted into the openings on both sides of a sleeve 150 (refer to FIG. 5(b)) included in the adapter. Then, the optical fibers 120 exposed from the connection end surfaces 111 of the ferrules 110 are optically connected to each other by abutting the connection end surfaces 111 of the pair of ferrules 110 against each other in the sleeve 150.

If a contaminant such as dirt, dust, and oil is adhered to the connection end surface 111 of the ferrule 110 at the time of abutting, it may cause damage at the time of attaching and detaching, an increase in transmission loss, and the like. Therefore, the connection end surface 111 of the ferrule 110 is cleaned using the optical connector cleaning tool 1 described below before the optical connectors 100 are connected.

Although the optical connector 100 described above is an optical connector plug used in the plug-adapter-plug coupling system, the connection end surface of the ferrule of the optical connector receptacle used in the plug-receptacle coupling system may be cleaned using the optical connector cleaning tool 1 described below. Specifically, the optical connector receptacle includes a ferrule attached to the front end of the optical fiber and incorporated into a housing into which the optical connector plug is inserted.

Alternatively, a cap having an inner hole having the same shape as the inner hole of the adapter may be attached to the front end of the optical connector cleaning tool 1, and the optical connector plug may be inserted into the cap to clean the connection end surface of the optical connector plug alone in a state where the optical connector plug is not inserted into the adapter.

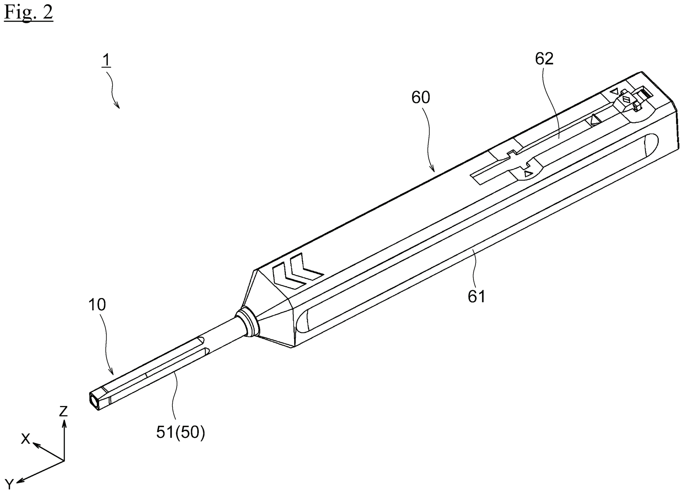

Hereinafter, the configuration of the optical connector cleaning tool 1 in the present embodiment will be described in detail with reference to FIG. 2 to FIG. 9.

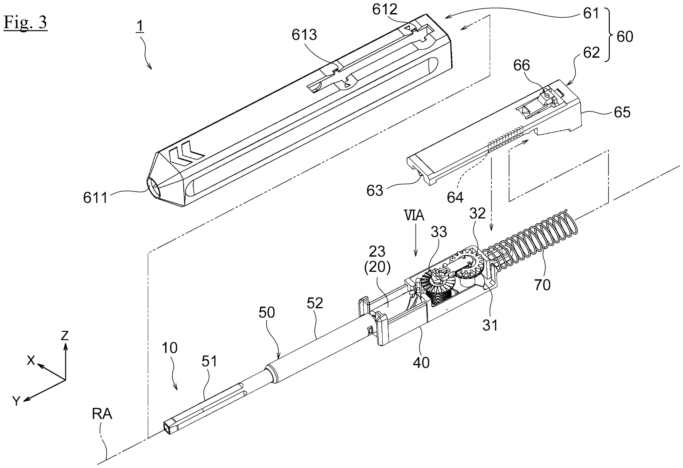

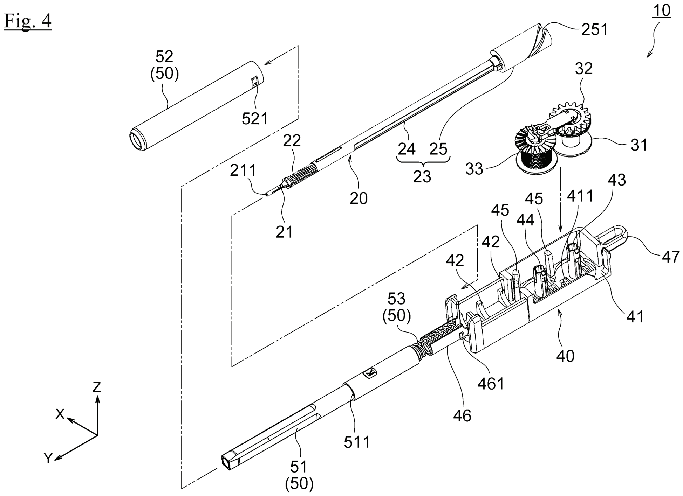

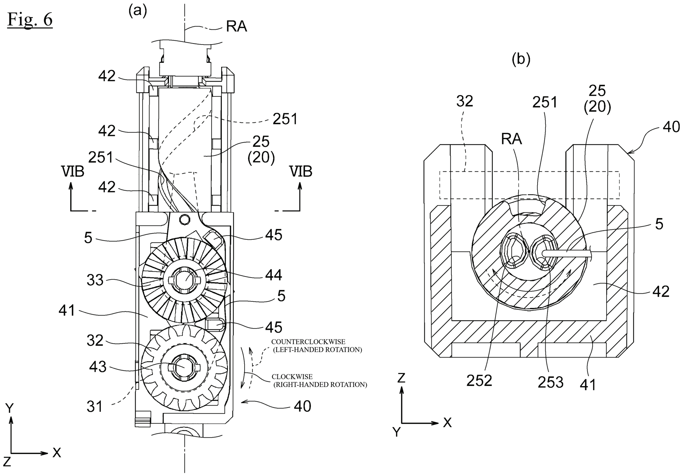

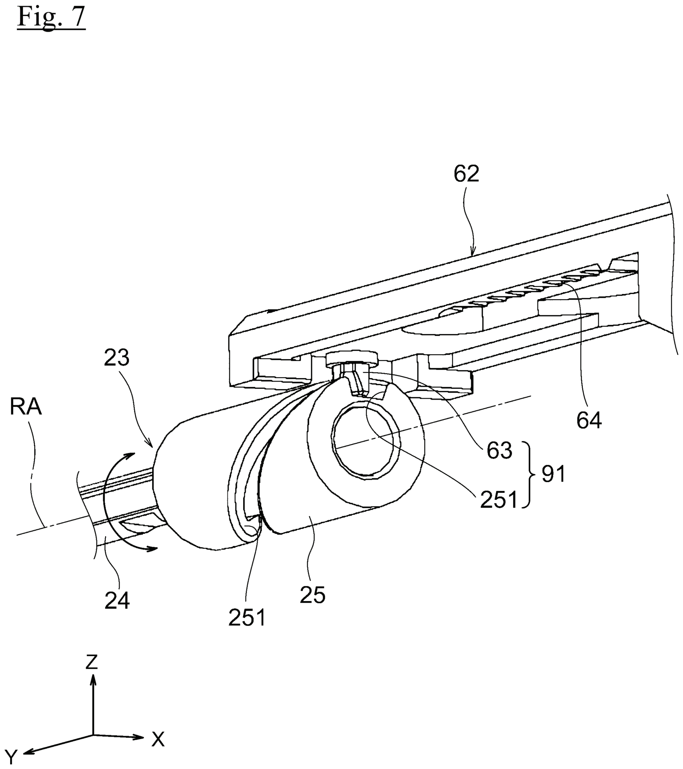

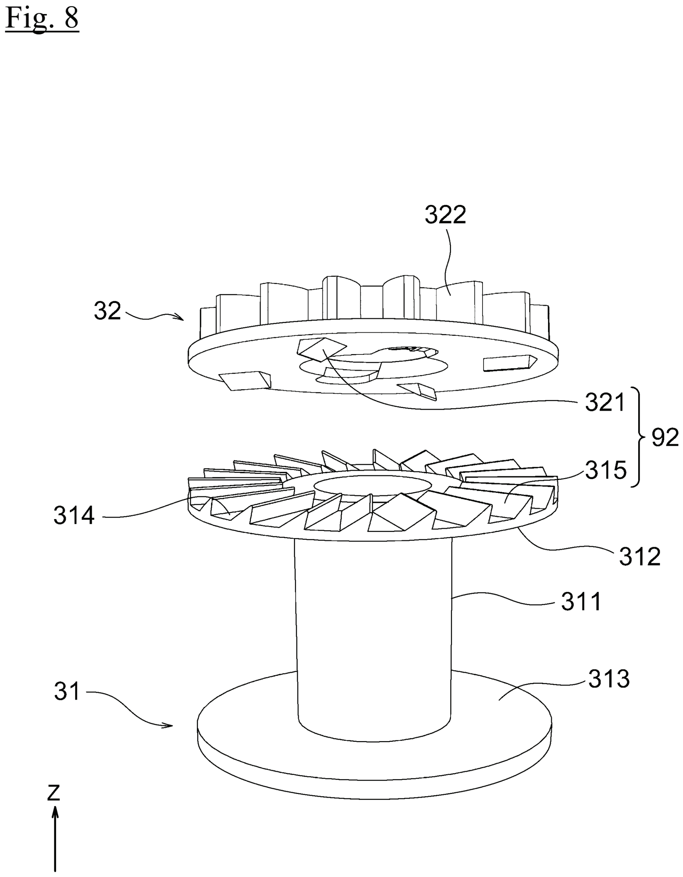

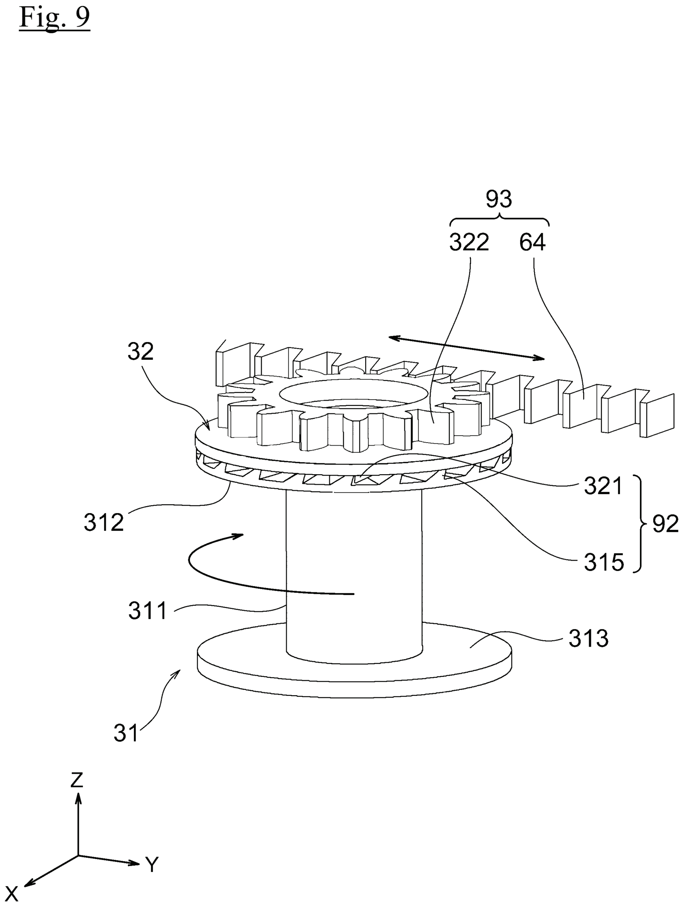

FIG. 2 is a perspective view showing the optical connector cleaning tool 1 in the present embodiment, FIG. 3 is an exploded perspective view of the optical connector cleaning tool 1 in the present embodiment, FIG. 4 is a perspective view showing the cleaning unit 10 in the present embodiment. FIG. 5(a) is a front view showing the front end portion of the cleaning head 21 in the present embodiment, and FIG. 5(b) is a cross-sectional view taken along line VB-VB in FIG. 5(a). FIG. 6(a) is a plan view of the inside of the support body 40 seen along the arrow VIA in FIG. 3, and FIG. 6(b) is a cross-sectional view taken along line VIB-VIB in FIG. 6(a). FIG. 7 is a perspective view showing the rotation mechanism 91 in the present embodiment, FIG. 8 is a perspective view showing the transmission mechanism 92 in the present embodiment, and FIG. 9 is a perspective view showing the drive mechanism 93 in the present embodiment.

As shown in FIG. 2 to FIG. 4, the optical connector cleaning tool 1 (hereinafter, also simply referred to as "cleaner 1") in the present embodiment includes a cleaning unit 10, a case (housing) 60, and a first biasing member 70. The cleaning unit 10 is accommodated in the case 60 so that the cleaning unit 10 can relatively move with respect to the case 60 in the Y-axis direction in the figure. The first biasing member 70 is interposed between the cleaning unit 10 and the case 60 and biases the cleaning unit 10 to the +Y direction in the figure. The cleaning unit 10 includes a cleaning shaft 20, a winding bobbin 31 that winds up the cleaning element 5, a gear 32, a feeding bobbin 33 that sends out the cleaning element 5, a support body 40, and a guide nozzle 30. The cleaner 1 cleans the optical connector 100 by pressing the cleaning element 5 wound around the cleaning shaft 20 against the connection end surface 111 of the ferrule 110 of the optical connector 100 with the pressing surface 211 (described later) of the cleaning shaft 20.

The cleaning element 5 is a continuous body obtained by processing a cleaning cloth into a thread or string shape. As a specific example of the cleaning cloth, for example, a nonwoven fabric or a woven fabric made of ultrafine fibers such as polyester and nylon can be exemplified. Although the cleaning element 5 of the present embodiment has a circular cross-sectional shape, the cross-sectional shape of the cleaning element 5 is not limited to this and may be, for example, a polygonal cross-sectional shape. Although not particularly limited, the cleaning element 5 has a diameter of 0.1 mm to 1 mm, and preferably has a diameter of 0.2 to 0.3 mm. A narrow tape-like continuous body obtained by processing the cleaning cloth into a band shape may be used as the cleaning element 5.

The cleaning shaft 20 is an elongate member for pressing the cleaning element 5 against the connection end surface 111 of the optical connector 100. The cleaning element 5 is held by the cleaning shaft 20 so that the cleaning element 5 is turned back at the pressing surface 211. The unused cleaning element 5 is wound around the feeding bobbin 33. The unused cleaning element 5 is supplied from the feeding bobbin 33 to the cleaning shaft 20. Then, the cleaning element 5 used on the pressing surface 211 is collected to the winding bobbin 31. The cleaning shaft 20 includes a cleaning head (head member) 21, a second biasing member 22, and a shaft member 23.

The cleaning head 21 is a member that forms the front end portion of the cleaning shaft 20. As shown in FIG. 5(a) and FIG. 5(b), the cleaning head 21 has a pressing surface 211 at its front end for pressing the cleaning element 5 against the connection end surface 111 of the optical connector 100. The pressing surface 211 has a shape (in the present embodiment, a circular shape) that corresponds to the shape of the connection end surface 111 of the ferrule 110 of the optical connector 100 as a cleaning object.

A pair of guide holes 212 and 213 are formed in the pressing surface 211, and the cleaning element 5 can pass through the inside of the cleaning shaft 20. The unused cleaning element 5 sent out from the feeding bobbin 33 passes through the inside of the cleaning shaft 20 and one guide hole 212 and is supplied to the pressing surface 211. The cleaning element 5 supplied to the pressing surface 211 passes over the center of the pressing surface 211 and moves on the pressing surface 211 toward the other guide hole 213. The used cleaning element 5 passes through the other guide hole 213 and the inside of the cleaning shaft 20 and is wound around the winding bobbin 31. Instead of the above-mentioned guide holes 212 and 213, a pair of guide grooves may be formed on the side surface of the cleaning head 21, and the cleaning element 5 may be supplied to and collected from the pressing surface 211 through the guide grooves.

As shown in FIG. 4, the shaft member 23 includes a shaft main body 24 and an expanded part 25. Each of the shaft main body 24 and the expanded part 25 has a cylindrical shape, and the expanded part 25 is connected to the rear end of the shaft main body 24. Although not particularly limited, the shaft member 23 is made of, for example, a resin material, and the shaft main body 24 and the expanded part 25 are integrally formed.

The cleaning head 21 described above is disposed on the front end side of the shaft main body 24. The cleaning head 21 is supported by the shaft main body 24 to be relatively movable in the Y-axis direction in the figure. Here, the Y-axis direction in the figure is an insertion/removal direction of the cleaner 1 with respect to the adapter at the time of cleaning, is an axial direction (longitudinal direction) of the cleaning shaft 20 and is the pressing direction in which the cleaning head 21 presses the pressing surface 211 via the cleaning element 5. Although not particularly illustrated, the shaft member 23 includes a locking structure that stops the relative rotation of the cleaning head 21 with respect to the shaft main body 24 around the rotation axis RA (described later).

The second biasing member 22 is interposed between the cleaning head 21 and the shaft member 24. The second biasing member 22 biases the cleaning head 21 forward with respect to the shaft main body 24, and the pressing surface 211 of the cleaning head 21 can press the cleaning element 5 against the connection end surface 111 of the optical connector 100 with an appropriate pressing force. As a specific example of the second biasing member 22, an elastic body such as a spring or a rubber can be exemplified, and as a specific example of the spring, a coil spring or the like can be exemplified.

A spiral cam groove 251 is formed on the outer circumferential surface of the expanded part 25. A rotation mechanism 91 that rotates the cleaning shaft 20 is realized by the cam groove 251 and a cam pin 63 of the case 60 described later. The rotation mechanism 91 rotates the cleaning shaft 20 around a rotation axis RA parallel to the longitudinal direction of the cleaning shaft 20 in accordance with the relative movement of the support body 40 with respect to the case 60. As shown in FIG. 6(a) and FIG. 7, the cam groove 251 has a left-handed (counterclockwise) spiral shape around the rotation axis RA. The rotation direction of the spiral shape of the cam groove 251 is a direction in which the spiral rotates as approaching the front end side of the cleaner 1 from the rear end side.

As shown in FIG. 6(b), the expanded part 25 has a supply port 252 and a collection port 253. The cleaning element 5 that is sent out from the feeding bobbin 33 enters the shaft main body 24 through the supply port 252 and is supplied to the pressing surface 211 of the cleaning head 21. On the other hand, the cleaning element 5 that is collected from the pressing surface 211 of the cleaning head 21 and passes through the shaft main body 24 enters the support body 40 through the collection port 253 and is wound around the winding bobbin 31. FIG. 6(b) is a cross-sectional view seen in the direction from the rear end side to the front end side of the cleaner 1. For convenience of explanation, the cleaning element 5 passing through the supply port 252 is not shown in FIG. 6(b).

In the present embodiment, the supply port 252 and the collection port 253 face each other across the rotation axis RA. The supply port 252 is disposed on the left side with respect to the rotation axis RA, while the collection port 253 is disposed on the right side with respect to the rotation axis RA.

That is, in the present embodiment, the collection port 253 is disposed on the right side with respect to the rotation axis RA, whereas the spiral shape of the cam groove 251 rotates in left-handed rotation (counterclockwise) around the rotation axis RA.

The winding bobbin 31 is a bobbin that winds up the cleaning element 5 used on the pressing surface 211 of the cleaning head 21. As shown in FIG. 8 and FIG. 9, the winding bobbin 31 includes a barrel 311 and a pair of flanges 312 and 313. The winding bobbin 31 is made of, for example, a resin material, and the barrel 311 and the flanges 312 and 313 are integrally formed.

The used cleaning element 5 is wound around the barrel 311. The barrel 311 has a cylindrical shape, and a first shaft part 43 of the support body 40 (described later) is inserted into the barrel 311. Each of flanges 312 and 313 has a disk shape having an outer diameter larger than the outer diameter of the barrel 311, and the pair of flanges 312 and 313 are disposed on both ends of the barrel 311. A ratchet gear part 315 is formed on the upper side (on the +Z direction side in the figure) outer surface 314 of the flange 312.

The gear 32 is a gear member attached to the winding bobbin 31. Specifically, the first shaft part 43 of the support body 40 inserted into the inner hole of the winding bobbin 31 is also inserted into the inner hole of the gear 32. As a result, the gear 32 is adjacent to the outer surface 314 of the winding bobbin 31 and is disposed coaxially with the winding bobbin 31. The gear 32 includes a ratchet gear part 321 and a pinion gear part 322. The gear 32 is made of, for example, a resin material, and the ratchet gear part 321 and the pinion gear part 322 are formed integrally.

The ratchet gear part 321 is formed on the lower surface (the surface on the -Z direction side in the figure) of the gear 32 so that the ratchet gear part 321 faces the ratchet gear part 315 of the winding bobbin 31. The ratchet gear part 321 is engaged with the ratchet gear part 315 of the winding bobbin 31 when the gear 32 rotates in one direction (right-handed rotation (clockwise) in FIG. 6(a)). On the other hand, the ratchet gear part 321 is not engaged with the ratchet gear part 315 of the winding bobbin 31 when the gear 32 rotates in the other direction (left-handed rotation (counterclockwise) in FIG. 6(a)).

That is, a transmission mechanism 92 is realized by the ratchet gear part 321 and the ratchet gear part 315 of the winding bobbin 31, and the transmission mechanism 92 transmits rotation in only one direction from the gear 32 to the winding bobbin 31. When the gear 32 rotates in one direction (right-handed rotation (clockwise) in FIG. 6(a)), the transmission mechanism 92 transmits the rotation of the gear 32 to the winding bobbin 31 to rotate the winding bobbin 31. On the other hand, when the gear 32 rotates in the other direction (left-handed rotation (counterclockwise) in FIG. 6(a)), the rotation of the gear 32 is not transmitted to the winding bobbin 31, and the winding bobbin 31 does not rotate.

On the other hand, the pinion gear part 322 is formed on the upper surface (the surface on the +Z direction side in the figure) of the gear 32. A rack gear part 64 of the case 60 described later is engaged with the pinion gear part 322. A drive mechanism 93 that rotationally drives the winding bobbin 31 is realized by the pinion gear part 322 and the rack gear part 64. The drive mechanism 93 rotates the winding bobbin 31 to wind the cleaning element 5 around the winding bobbin 31 in accordance with the relative movement of the support body 40 with respect to the case 60.

The feeding bobbin 33 is a bobbin that sends out the cleaning element 5 used on the pressing surface 211 of the cleaning head 21. Similar to the winding bobbin described above, the feeding bobbin 33 includes a barrel and a pair of flanges. The unused cleaning element 5 is previously wound around the barrel of the feeding bobbin 33. The gear 32 is not attached to the feeding bobbin 33.

The support body 40 is a member that supports the cleaning shaft 20, the winding bobbin 31, the gear 32, and the feeding bobbin 33. As shown in FIG. 4, FIG. 6(a) and FIG. 6(b), the support body 40 includes a base part 41, support walls 42, shaft parts 43 and 44, a guide pin 45, a tubular part 46 and a convex part 47. The support walls 42, the shaft parts 43 and 44 and the guide pin 45 are supported by the base part 41. The tubular part 46 protrudes from the front end side (the +Y direction side in the figure) wall of the support body 40 to the +Y direction in the figure. On the other hand, the convex part 47 protrudes from the rear end side (the -Y direction side in the figure) wall of the support body 40 to the -Y direction in the figure. The support body 40 is made of, for example, a resin material, and the base part 41, the support walls 42, the shaft parts 43 and 44, the guide pin 45, the tubular part 46, and the convex part 47 are integrally formed.

The cleaning shaft 20 is supported by the support body 40 so that the cleaning shaft 20 is rotatable around the rotation axis RA. Specifically, each of the plurality of (three in the present embodiment) support walls 42 of the support body 40 has an arc-shaped recess corresponding to the outer peripheral surface of the expanded part 25 of the cleaning shaft 20. The expanded part 25 is held by the recesses of the support walls 42, and the cleaning shaft 20 is rotatably supported by the support body 40. On the other hand, the shaft main body 24 of the cleaning shaft 20 protrudes from the support body 40 to the +Y direction in the figure via the tubular part 46 of the support 40.

The first shaft part 43 is inserted into the inner hole of the winding bobbin 31, and the winding bobbin 31 is rotatably supported by the support body 40. The first shaft part 43 is also inserted into the inner hole of the gear 32, and the gear 32 is supported by the support 40 so that the gear 32 is rotatable coaxially with the winding bobbin 31. The second shaft part 44 is inserted into the inner hole of the feeding bobbin 33, and the feeding bobbin 33 is rotatably supported by the support body 40. As shown in FIG. 6(a), the cleaning element 5 that passes through the cleaning shaft 20 and enters the support body 40 through the collection port 253 is guided to the winding bobbin 31 by a plurality of (two in the present embodiment) guide pins 45.

The base part 41 of the support body 40 includes claw parts 411 at positions facing the winding bobbin 31 and the feeding bobbin 33. On the other hand, although not particularly illustrated, a plurality of recesses are intermittently formed along the circumferential direction on the outer surface of the lower side (-Z direction side in the figure) flange 313 of the winding bobbin 31. The idling of the winding bobbin 31 is restricted by engaging the claw part 411 with the recesses. Similarly, the idling of the feeding bobbin 33 is restricted by engaging the claw part 411 with the recesses formed on the outer surface of the lower side flange of the feeding bobbin.

As shown in FIG. 3 and FIG. 4, the guide nozzle 50 includes a first tubular body 51, a second tubular body 52, and a third biasing member 53. The guide nozzle 50 is disposed on the front end side of the support body 40. The guide nozzle 50 is supported by the support body 40 so that the first tubular body 51 is relatively movable with respect to the support body 40 in the Y-axis direction in the figure.

Each of the first and second tubular bodies 51 and 52 has a cylindrical shape. The first tubular body 51 has an outer diameter smaller than the inner diameter of the second tubular body 52 and is inserted into the second tubular body 52. The first tubular body 51 is inserted into the second tubular body 52 so that the first tubular body 51 is relatively movable in the Y-axis direction in the figure. A step 511 disposed in the substantially center of the first tubular body 51 is engaged with the protrusion (not shown) formed on the inner circumference of the front end of the inner hole of the second tubular 52, therefore the movement of the first tubular body 51 to the +Y direction in the figure is restricted.

The third biasing member 53 is inserted into the tubular part 46 of the support body 40. The rear side (the -Y direction side in the figure) end of the third biasing member 53 contacts the front side (the +Y direction side in the figure) wall of the support body 40. On the other hand, the rear side (the -Y direction side in the figure) end of the first tubular part 51 contact the front side (the +Y direction side in the figure) end of the third biasing member 53. In other words, the third biasing member 53 is interposed between the first tubular body 51 and the support body 40. As a specific example of the third biasing member 53, an elastic body such as a spring or a rubber can be exemplified, and as a specific example of the spring, a coil spring or the like can be exemplified.

This third biasing member 53 is inserted into the second tubular body 52 together with the first tubular body 51. The tubular part 46 of the support body 40 is also inserted into the second tubular body 52. Protrusions 461 are formed on the outer circumferential surface of the tubular part 46 of the support body 40, and the windows 521 are formed in the rear end portion of the outer circumferential surface of the second tubular body 52. The second tubular body 52 is fixed to the support body 40 by inserting the protrusions 461 into the windows 521. In this state, the third biasing member 53 biases the first tubular body 51 to the +Y direction in the figure.

The portion of the cleaning shaft 20 that protrudes from the support body 40 is inserted into the guide nozzle 50. The portion of the cleaning shaft 20 that protrudes from the support body 40 is a portion of the cleaning shaft 20 closer to the front end side (the +Y direction side in the figure) than the expanded part 25 and specifically includes the cleaning head 21, the second biasing member 22, and the shaft main body 24.

In the normal state (a state in which the cleaner 1 is not used (a state in which the front end of the guide nozzle 50 is not inserted into the adapter)), the front end of the cleaning shaft 20 does not protrude from the guide nozzle 50 but is located inside the guide nozzle 50. Then, when the front end of the guide nozzle 50 is inserted into the adapter and the front end of the guide nozzle 50 abuts against the end surface 151 (refer to FIG. 5(b)) of the sleeve 150 at the time of cleaning the optical connector 100 with the cleaner 1, the first tubular body 51 is relatively retracted with respect to the second tubular body 52, and the front end of the cleaning shaft 20 protrudes from the guide nozzle 50.

The case 60 accommodates a part of the cleaning unit 10 and the first biasing member 70. As shown in FIG. 2 and FIG. 3, the case 60 includes a case main body 61 and an adjustment member 62. The case main body 61 has two cutouts 612 and 613, and an opening 611 is formed at the front end of the case main body 61. The cleaning unit 10 is inserted into the case main body 61 through a rear side (the -Y direction side in the figure) opening of the case main body 61, and the front end portion of the cleaning unit 10 protrudes from the case main body 61 through the opening 611. The cleaning unit 10 is accommodated in the case main body 61 so that the cleaning unit 10 is relatively movable with respect to the case main body 61 in the Y-axis direction in the figure.

The adjustment member 62 includes a cam pin 63 and a rack gear part 64. The adjustment member 62 covers the support body 40 so that the cleaning unit 10 is relatively movable with respect to the adjustment member 62 in the Y-axis direction in the figure. The cam pin 63 of the adjustment member 62 is inserted into the cam groove 251 of the shaft member 23. Therefore, when the cleaning unit 10 relatively moves with respect to the case 60, the cleaning shaft 20 is rotated around the rotation axis RA by the rotation mechanism 91 including the cam pin 63 and the cam groove 251. Further, the rack gear part 64 of the adjustment member 62 is engaged with the pinion gear part 322 of the gear 32. Therefore, when the cleaning unit 10 relatively moves with respect to the case 60, the winding bobbin 31 is rotated by the drive mechanism 93 including the rack gear part 64 and the pinion gear part 322.

The first biasing member 70 is interposed between the convex part 47 of the support body 40 and a rear side (the -Y direction side in the figure) wall 65 of the adjustment member 62. The first biasing member 70 biases the cleaning unit 10 toward the front end side (the +Y direction side in the figure). As a specific example of the first biasing member 70, an elastic body such as a spring or a rubber can be exemplified, and as a specific example of the spring, a coil spring or the like can be exemplified.

The adjustment member 62 and the first biasing member 70, together with the cleaning unit 10, are inserted into the case main body 61 through a rear side (the -Y direction side in the figure) opening of the case main body 61 and are accommodated in the case main body 61. At this time, the adjustment member 62 is fixed to the case main body 61 by engaging the engagement piece 66 of the adjustment member 62 with the cutout 612 of the case main body 61.

The cleaning unit 10 can be advanced with respect to the case main body 61 by advancing the adjustment member 62 with respect to the case main body 61 and engaging the engagement piece 66 with another notch 613. That is, the projection amount of the cleaning unit 10 from the case main body 61 can be adjusted by engaging the engagement piece 66 to either the notch 612 or 613. The adjustment of the projection amount of the cleaning unit 10 is performed before the cleaning operation of the optical connector 100, and the adjustment member 62 is not moved with respect to the case main body 61 during the cleaning operation of the optical connector 100.

When the optical connector 100 is cleaned using the cleaner 1 described above, the cleaning is performed in the following manner.

First, the operator inserts the front end portion of the guide nozzle 50 of the cleaner 1 into the opening of the adapter. As a result, the front end of the guide nozzle 50 abuts the end surface 151 of the sleeve 150. Then, when the operator pushes the cleaner 1 toward the adapter, the third biasing member 53 is compressed, the first tubular body 51 retracts with respect to the second tubular body 52, and the cleaning head 21 of the cleaning shaft 20 protrudes from the front end of the guide nozzle 50. Then, the cleaning head 21 enters the sleeve 150, and the cleaning head 21 brings the cleaning element 5 into contact with the connection end surface 111 of the optical connector 100.

Next, when the operator pushes the case 60 against the guide nozzle 50 toward the +Y direction in the figure, the cleaning unit 10 relatively retreats with respect to the case 60, and the first biasing member 70 is compressed, and the second biasing member 22 is also compressed. The cleaning head 21 presses the cleaning element 5 against the connection end face 111 of the ferrule 110 with an appropriate pressing force by the compression of the second biasing member 22.

Further, the relative linear motion of the cleaning unit 10 with respect to the case 60 by the pushing operation of the operator is converted into the rotation motion of the gear 32 by the rack gear part 64 and the pinion gear part 322. Since the rotation direction of the gear 32 is in one direction (right-handed rotation (clockwise) in FIG. 6(a)), the ratchet gear parts 321 and 315 are engaged with each other, and the rotation of the gear 32 is transmitted to the winding bobbin 31. As a result, the winding bobbin 31 rotates, and the cleaning element 5 used on the pressing surface 211 of the cleaning shaft 20 is wound around the winding bobbin 31. Further, since the feeding bobbin 33 is rotated by the tension acting on the cleaning element 5 in accordance with the winding movement, the unused cleaning element 5 is fed from the feeding bobbin 33 to the pressing surface 211 of the cleaning shaft 20. Therefore, the cleaning element 5 slides while being pressed against the connection end surface 111 of the optical connector 100, and the contaminant adhering to the connection end surface 111 is wiped.

Furthermore , the cam pin 63 relatively slides in the cam groove 251 by the above-described pushing operation of the operator, and the cleaning shaft 20 rotates around the rotation axis RA. Therefore, even if the width of the thread-like or string-like cleaning element 5 is narrower than the connection end surface 111 to be cleaned, the contaminant can be wiped off from the entire area of the connection end surface 111. Although not particularly limited, the rotation angle of the cleaning shaft 20 is preferably 180 degrees or more.

In the present embodiment, as shown in FIG. 6(b), when the cleaning unit 10 starts to relatively move with respect to the case 60, the rotation mechanism 91 rotates the cleaning shaft 20 around the rotation axis RA so that the collection port 253 of the cleaning shaft 20 moves away from the gear 32. Specifically, the collection port 253 is disposed on the right side with respect to the rotation axis RA, while the spiral shape of the cam groove 251 rotates in left-handed rotation (counterclockwise) around the rotation axis RA. Therefore, when the relative movement of the cleaning unit 10 with respect to the case 60 starts by the above-described pushing operation of the operator, the rotation mechanism 91 rotates the cleaning shaft 20 around the rotation axis RA so that the collection port 253 approaches the base part 41 of the support main body 40 as shown by the solid arrow in FIG. 6(b).

In the present embodiment, since the rotation mechanism 91 rotates the cleaning shaft 20 so that the collection port 253 approaches the base part 41 of the support body 40, the cleaning element 5 is preferentially wound around the portion of the barrel 311 of the winding bobbin 31 away from the gear 32 (the -Z direction side in the figure). Therefore, it is possible to prevent the cleaning element 5 from overflowing from the winding bobbin 31 and being entangled with the gear 32, and it is possible to increase the number of times in which the cleaner 1 can clean the optical connector 100.

Further, a guide surface of a guide pin of a support body formed by injection molding may be inclined, and a cleaning element guided by the inclined guide surface may be unevenly wound around the winding bobbin. On the other hand, in the present embodiment, since the rotation mechanism 91 rotates the cleaning shaft 20 so that the collection port 253 approaches the base part 41 of the support body 40, it is possible to preferentially wind the cleaning element 5 on the root side of the guide pin 45, and it is possible to prevent the cleaning element 5 from overflowing from the winding bobbin 31 and being entangled with the gear 32.

Next, when the operator releases the pushing of the case 60 with respect to the guide nozzle 50, the cleaning unit 10 relatively moves forward with respect to the case 60 by the elastic force of the first biasing member 70. At this time, since the rotation direction of the gear 32 is the other direction (left-handed rotation (counterclockwise) in FIG. 6(a)) and the ratchet gear parts 321 and 315 are not engaged with each other, the winding bobbin 31 does not rotate. On the other hand, the cam pin 63 relatively slides in the cam groove 131 by releasing the pushing, and, as shown by the dashed arrow in FIG .6 (b), the cleaning shaft 20 rotates in the direction opposite to the rotation direction during the above-mentioned pushing operation.

When the cleaning is finished, the operator removes the cleaner 1 from the optical connector 100 by pulling out the front end portion of the guide nozzle 50 of the cleaner 1 from the optical connector 100.

As described above, in the present embodiment, when the cleaning unit 10 starts to relatively move with respect to the case 60, the rotation mechanism 91 rotates the cleaning shaft 20 so that the collection port 253 of the cleaning shaft 20 moves away from the gear 32. Therefore, it is possible to prevent the cleaning element 5 from being entangled with the gear 32, and it is possible to increase the number of times in which the optical connector 100 can be cleaned.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

For example, although the collection port 253 is disposed on the right side with respect to the rotation axis RA and the spiral shape of the cam groove 251 rotates in left-handed rotation (counterclockwise) around the rotation axis RA, the position of the collection port 253 with respect to the rotation axis RA and the rotation direction of the spiral shape of the cam groove 251 are not particularly limited to those described above, as long as they are opposite to each other. Specifically, the collection port 253 may be disposed on the left side with respect to the rotation axis RA, and the spiral shape of the cam groove 251 may rotate in right-handed rotation (clockwise) around the rotation axis RA.

### [EXPLANATIONS OF LETTERS OR NUMERALS]

- 1: Optical connector cleaning tool
- 5: Cleaning element
- 10: Cleaning unit
- 20: Cleaning shaft
- 21: Cleaning head
- 211: Pressing surface
- 212, 213: Guide hole
- 22: Second biasing member
- 23: Shaft member
- 24: Shaft main body
- 25: Expanded part
- 251: Cam groove
- 252: Supply port
- 253: Collection port
- 31: Winding bobbin
- 311: Barrel
- 312, 313: Flange
- 314: Outer surface
- 315: Ratchet gear part
- 32: Gear
- 321: Ratchet gear part
- 322: Pinion gear part
- 33: Feeding bobbin
- 40: Support body
- 41: Base part
- 411: Claw part
- 42: Support wall
- 43: First shaft part
- 44: Second shaft part
- 45: Guide pin
- 46: Tubular part
- 461: Protrusion
- 47: Convex part
- 50: Guide nozzle
- 51: First tubular body
- 511: Step
- 52: Second tubular body
- 521: Window
- 53: Third biasing member
- 60: Case
- 61: Case main body
- 611: Opening
- 612, 613: Cutout
- 62: Adjustment member
- 63: Cam pin
- 64: Rack gear part
- 65: Rear side wall
- 66: Engagement piece
- 70: First biasing member
- 91: Rotation mechanism
- 92: Transmission mechanism
- 93: Drive mechanism
- 100: Optical connector
- 110: Ferrule
- 111: Connection end surface
- 120: Optical fiber
- 130: Housing
- 131: Opening
- 150: Sleeve
- 151: End surface

## Claims

1. An optical connector cleaning tool that cleans a connection end surface of an optical connector, the optical connector cleaning tool comprising:
a cleaning shaft that comprises a pressing surface pressing a cleaning element against the connection end surface and in which the cleaning element is wound on the pressing surface;
a feeding bobbin that supplies the cleaning element to the pressing surface,
a winding bobbin that collects the cleaning element from the pressing surface,
a support body that supports the cleaning shaft, the feeding bobbin, and the winding bobbin,
a housing that accommodates the support body so that the support body is relatively movable with respect to the housing;
the rotation mechanism that rotates the cleaning shaft around a rotation axis parallel to a longitudinal direction of the cleaning shaft in accordance with a relative movement of the support body with respect to the housing; and
a gear attached to the winding bobbin, wherein
the cleaning shaft comprises:
a supply port through which the cleaning element supplied to the pressing surface passes; and
a collection port through which the cleaning element collected from the pressing surface passes, and
the rotation mechanism rotates the cleaning shaft around the rotation axis so that the collection port moves away from the gear when the relative movement of the support body with respect to the housing starts.

2. The optical connector cleaning tool according to claim 1, wherein
the rotation mechanism comprises:
a cam groove included in the cleaning shaft; and
a cam pin included in the housing and inserted into the cam groove,
the collection port is disposed on one side with respect to the rotation axis, and
the cam groove has a spiral shape that rotates in an other side around the rotation axis.

3. The optical connector cleaning tool according to claim 1 or 2, wherein
the support body comprises:
a first shaft part that rotatably supports the feeding bobbin;
a second shaft part that rotatably supports the winding bobbin; and
a base part that supports the first and second shaft parts, and
the rotation mechanism rotates the cleaning shaft around the rotation axis so that the collection port approaches the base part when the relative movement of the support body with respect to the housing starts.

4. The optical connector cleaning tool according to any one of claims 1 to 3, comprising a drive mechanism that rotates the winding bobbin to wind the cleaning element around the winding bobbin in accordance with the relative movement of the support body with respect to the housing, and
the drive mechanism comprises:
a pinion gear part included in the gear; and
a rack gear part included in the housing and that is engaged with the pinion gear part.

5. The optical connector cleaning tool according to any one of claims 1 to 4, comprising a transmission mechanism that transmits rotation in only one direction from the gear to the winding bobbin, and
the transmission mechanism comprises:
a first engagement part included in the gear; and
a second engagement part included in the winding bobbin and that is engaged with the first engagement part when the gear rotates in the one direction.
